# EUROPEAN PATENT APPLICATION

(11) **EP 4 002 900 A1**
(43) Date of publication of application: **25.05.2022**
(21) Application number: 20207460.5
(22) Date of filing: 13.11.2020
(51) Int. Cl.: H04W 12/06, H04L 29/06, G10L 15/22, G10L 17/22, H04L 9/32, G10L 25/24

(54) **METHOD AND DEVICE FOR MULTI-FACTOR AUTHENTICATION WITH VOICE BASED AUTHENTICATION**

(71) Applicant: Deutsche Telekom AG, 53113 Bonn (DE)
(72) Inventor: MINOW, Jascha, 64625 Bensheim (DE); JAHN, Carl, 65191 Wiesbaden (DE); EL-MALLOUKI, Said, 56329 St. Goar (DE); PLATSCHEK, Martin Michael, 13347 Berlin (DE)
(74) Representative: Blumbach · Zinngrebe Patentanwälte PartG mbB

(57) **Abstract**

For improving and/or simplifying the verification of a person's identity, as it is for instance required for opening a bank account, the invention proposes a method for multi-factor authentication, said multi-factor authentication comprising a voice based authentication, the method comprising the steps of
a) capturing a voice input provided by a user,
b) transmitting an authentication request from an authentication requesting device to an authentication server (300), wherein said authentication request comprises the captured voice input,
c) verifying the user's identity by the authentication server (300) based on the received voice input and generating an authentication response by the authentication server (300) depending on the result of the verification, and
d) transmitting the authentication response from the authentication server (300) to a predefined response receiving device.

The invention further proposes an authentication server and an authentication system, which are adapted to perform the method.

## Description

The invention generally relates to the verification of a user's identity, and in particular to a method and a device for multi-factor authentication.

There are numerous situations, in which a user needs to authenticate by additional and burdensome steps. Examples are the ever more frequent and often mandatory two-factor authentication for logging into a service or for making bank transfers. Further examples are bank account openings or other business relationships, in which a customer needs to provide an identification document or needs to prove his identity. Another typical example, which most people will have already experienced for themselves, is that a person has forgotten a password and shall now reset it by various methods or the person shall identify oneself otherwise, before a new password or login can be issued.

An authentication factor defines the way in which a user may be authenticated, wherein these in particular fall into three categories: something the user knows, something the user has, and something the user is. The authentication factors of these categories may also be referred to as the knowledge factors, the ownership factors and the inherence factors.

Each authentication factor covers a range of elements used to authenticate or verify a person's identity prior to being granted access, approving a transaction request, signing a document or other work product, or the like.

Examples of knowledge factors, i.e. something a user knows, may comprise a password, a partial password, a pass phrase, a personal identification number (PIN), a challenge response, in which a user must answer a question or provide a pattern, or a security question.

Examples of ownership factors, i.e. something a user has, may comprise a wristband, an ID card, a security token, an implanted device, a cell phone with built-in hardware token, or a software token.

Examples of inherence factors, i.e. something a user is or does, may comprise a fingerprint, a retinal pattern, a DNA sequence, a signature, a face, a voice, unique bio-electric signals, or some other biometric identifier.

As the weakest level of authentication, only a single component from one of the three categories of factors is used to authenticate an individual's identity, referred to as single-factor authentication. The use of only one factor does not offer much protection from misuse or malicious intrusion. Therefore, this type of authentication typically is not recommended for financial or personally relevant transactions.

Multi-factor authentication involves two or more authentication factors, wherein two-factor authentication is a special case of multi-factor authentication involving exactly two factors. For example, using a bankcard, i.e. something the user has, along with a PIN, i.e. something the user knows, provides two-factor authentication. Business networks may require users to provide a password, i.e. a knowledge factor, and a pseudorandom number from a security token, i.e. an ownership factor.

The identity check in case of a bank account opening typically requires a valid identity card, which one needs to have at hand, when running through a video identification procedure, also referred to as a Video-Ident procedure. In a video identification procedure a live video connection is established with a customer, using the customer's smartphone or laptop, during which the customer will be asked to provide relevant ID documents such as a national ID, driver's license, or passport. A video identification procedure is a burdensome procedure. Even worse, however, and still quite common is a Post-Ident procedure, in which one needs to visit a post office, which typically does not have convenient opening hours, in particular not on weekends, when everyone would have time to reorganize one's finances. When using a Post-Ident procedure for authentication, it may well take a week or longer, until eventually the bank account or the business relationship has been established, not to mention the effort and the expense, in particular on the business' side, for shipping and processing the respective documents. Also, the waiting time on the customer's side, until finally a bank account has been opened, is not reasonable nowadays. For two-factor authentication or for a password reset typically access to a further end device, such as a smartphone, is expected, for receiving an mTAN or a recovery e-mail, both of which is inherently insecure. Furthermore, a problem may arise in such a situation, if the end device should not be at hand, be defective or simply run out of power.

It is an object of the invention to show a way to improve and/or simplify the verification of a person's identity, as it is for instance required for opening a bank account. In particular, it is an object of the invention to provide a method and a device for user authentication, which can be utilized for this purpose.

The inventive solution is provided by the features of the independent claims. Accordingly, the object of the invention is achieved by a method according to claim 1, by an authentication server according to claim 10 and by an authentication system according to claim 11. Preferred and/or advantageous embodiments are provided in the dependent claims.

Generally, any aspect or advantage described in the following with respect to the subject matter of an independent claim also relates to the subject matter of any other independent claim. In particular, any aspect or advantage described in the following in the context of a method generally also applies in the context of a device or system and vice versa.

A core aspect of the present invention may be seen in that a platform for secure voice authentication is provided, which allows to enable, nationwide and Europe-wide, the above described authentication scenarios, such as bank account opening, password recovery, account clearing or a simple 2 factor authentication using the voice of a user. The user with advantage is a customer of a telecommunications provider, for which an identity check has already been performed upon subscription to telecommunication services and accordingly respective user information is already stored in a database of the telecommunications provider, since typically users need to authenticate with an identity card, when entering a customer relationship on acquiring telephone services, either mobile or landline. Thus, when the user is already a customer, the problem of identity verification is inherently solved. Users, who are not already customers, need to get their identity verified once, for instance using a Post-Ident or Video-Ident procedure.

### Brief Description of the Figures

It is shown in
Fig. 1 a schematic view of an exemplary system, in which the inventive method may be performed,
Fig. 2 a schematic flowchart of the steps of a first exemplary embodiment of an inventive method,
Fig. 3 a schematic flowchart of the steps of a first exemplary embodiment of an inventive method,
Fig. 4 a schematic flowchart of the steps of a first exemplary embodiment of an inventive method,
Fig. 5 a schematic flowchart of the steps of a first exemplary embodiment of an inventive method,
Fig. 6 a schematic flowchart of the steps of a first exemplary embodiment of an inventive method, and
Fig. 7 a schematic flowchart of the steps of the authentication processing performed in each of the exemplary embodiments shown in Figures 2 to 6.

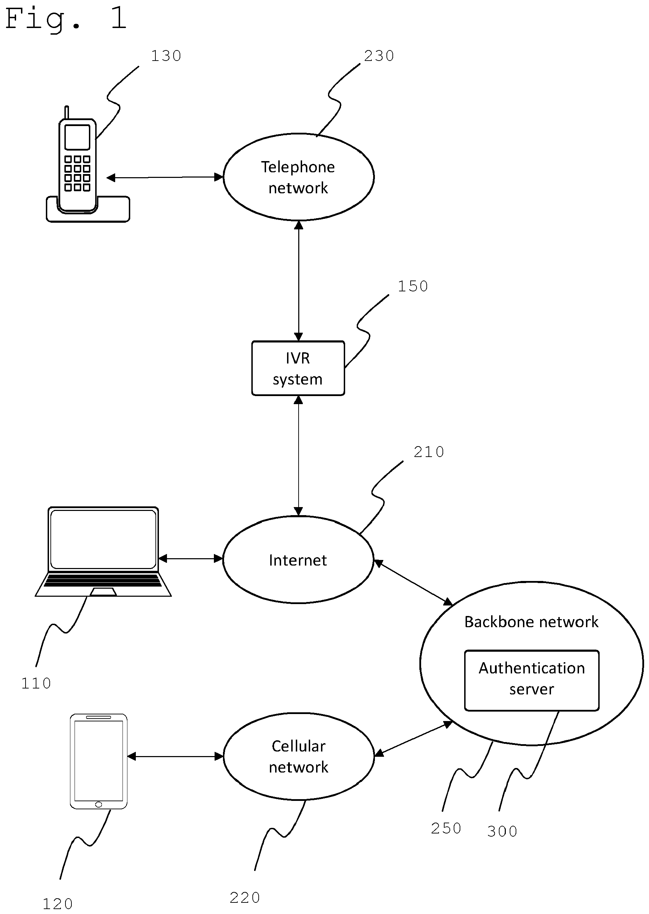

Fig. 1 schematically shows an exemplary system, in which the inventive method may be performed. There are shown three exemplary end devices 110, 120 and 130, which may be associated with the same or with different users. The first exemplary end device is a notebook 110, which is provided with a browser application, said browser application being adapted to communicate via the Internet 210 with authentication server 300. The second exemplary end device is a mobile communication device 120, for example a smartphone, which is adapted to communicate with the authentication server 300 via cellular network 220. Although not shown in Fig. 1, the mobile communication device 120 may also be adapted to communicate with the authentication server 300 via a WLAN network and the Internet 210.

The third exemplary end device is a telephone 130, which is connected to a telephone network 230. With the telephone 130, a user may call an IVR (Interactive Voice Response) system 150, wherein the IVR system 150 is adapted to communicate with the authentication server 300 via the Internet 210. Interactive voice response is a technology that allows a computer, typically a company's host system, to interact with humans through the use of voice and DTMF tones input via a telephone keypad, so that services of the host system may be requested and/or accessed, wherein the IVR system can respond with pre-recorded or dynamically generated audio to direct users on how to proceed.

The authentication server 300 in the shown embodiment is located in the backbone network 250 of a service provider, in particular a telecommunications service provider and/or an Internet service provider. Hence, a section of the communication path between the authentication server 300 and a respective one of end devices 110 and 120 and IVR 150 lies within the backbone network 250. In a preferred embodiment, the authentication server 300 has access to a customer database of the service provider, wherein said customer database is not shown in Fig. 1. However, the authentication server 300 not necessarily is associated with a service provider, but may also be located at some other location, which is accessible by the respective end devices or by the IVR 150.

In the following, a preferred embodiment of the inventive method is described.

Customers of the service provider deposit their voiceprint with their customer data. Non-customers create this voiceprint and need to get their identity verified once, for instance using a Post-Ident or Video-Ident procedure. When opening an account or in case of an arbitrary other request for two-factor authentication by a service provider, which is a partner connected to an authentication platform or service provided by the authentication server 300, wherein said partner is for example a bank, an insurance company or some kind of online service such as an online shop, the customer of the partner is offered not only to perform authorization, but also authentication, by means of his voice, i.e. to prove his identity. The customer gets random word combinations read-out by the authentication platform or gets them displayed on the end device of his choice, preferably not as text, but in the form of a Captcha, i.e. words which are generated as pictures in order to avoid the source code of a web page being read-out by malware. The customer then reads out the respective text passages. A software engine in the authentication server 300 or in a separate server, which is connected to the authentication server 300, not only converts the voice into text in order to verify that the correct text has been read out, but also compares the customer's voice with the voiceprint, which has been deposited for the respective customer. Only if the combination of both analyses provides a positive result, a positive confirmation of the customer's identity is provided. The account may be opened directly and online, since the authentication platform not only authenticated the customer, but also directly confirmed the customer's identity towards the partner, thereby making a further time- and cost-intensive Ident procedure unnecessary.

Particularly advantageous in the described method is the combination of voice authentication in connection with a user reading out randomly generated text snippets, which are displayed in the form of pictures to avoid automated read-out.

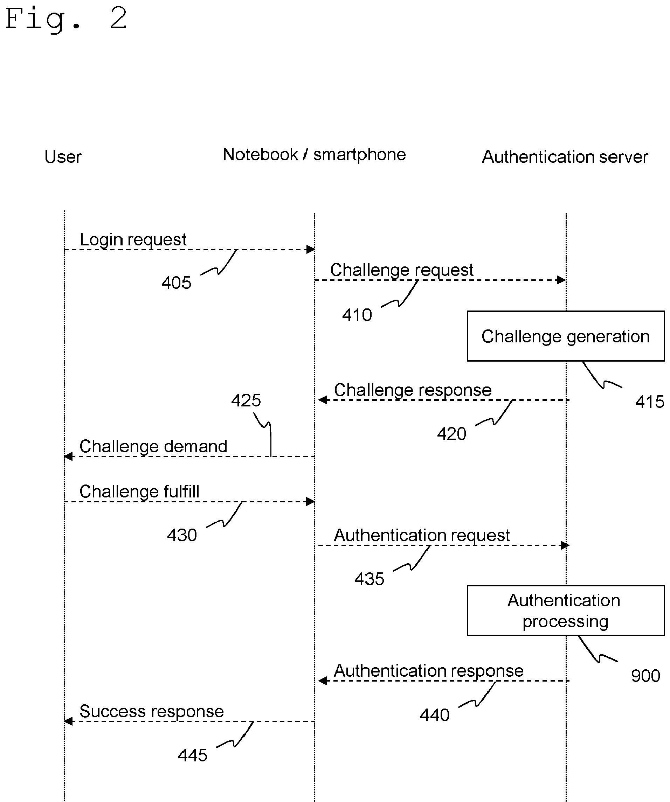

In Figures 2 to 6, the steps of different exemplary embodiments of the inventive method are respectively depicted.

For the methods described below it is assumed that for the respective user a voiceprint is stored in a database, wherein said database is integrated in the authentication server 150 or is accessible by the authentication server 150, wherein the user provides the voiceprint and the user's identity is authenticated once, wherein the authentication may for instance be performed by utilizing a Post-Ident or Video-Ident procedure. Preferably, the user provides the voiceprint after the user's identity has been authenticated. In a preferred embodiment of the invention, the user is a customer of a telecommunications provider and the database is a customer database of said telecommunications provider, wherein an identity check has already been performed for the user upon subscription to telecommunication services, which are provided by said telecommunications provider. Typically, a telecommunications provider provides a user account for each customer, so that a customer may simply provide a voiceprint, which is then stored in the provider's customer database in such a way that the voiceprint is associated with the respective user account. Preferably, it is further assumed that the user has also provided user-specific information, which is also stored in the database, wherein the knowledge of said user-specific information is suitable for identifying the respective user. Such user-specific information may for instance be the name of the user's spouse, kid, cousin or dog. In general, the user-specific information may be any information that only the actual user can know. The information that is stored in the database for the respective user is accessible by the authentication server 150 using an identification information, which uniquely identifies the respective user, wherein said identification information may for example be a username, a telephone number or a subscription number. In Fig. 2 an active voice authentication method is described utilizing for instance an Internet browser on the computer 110 or a mobile application installed on the mobile communication device 120. In step 405 a user or customer makes a login request to log into an online service account with the Internet browser or with the mobile application by providing username and password.

In order to proceed, the website or the mobile application requires a two-factor authentication from the user or offers a two-factor authentication to the user using the user's voice, resulting in a challenge request for voice verification being transmitted in step 410 from the computer 110 or from the mobile communication device 120 to the authentication server 300, i.e. to the authentication backend. The challenge request preferably comprises an identification information, which identifies the user, wherein this identification information may for example be the username provided by the user. The authentication server 300 in step 415 generates an individual challenge for the user's two-factor authentication attempt. In the shown embodiment, the challenge has the form of a text challenge. In a preferred embodiment, multiple random texts are generated for the individual text challenge, wherein only one of the multiple random texts needs to be read out by the user. Preferably, the correct random text to be read out aloud by the user is personalized to contain specific information that only the user is able to identify as the correct text to be read out aloud. This specific information is generated depending on individual user-specific information, which is stored in a database, in particular in a customer database of the service provider operating the authentication server 300. In step 420, the text challenge is transmitted from the authentication server 300 to the end device, from which the user attempts to login to the online service, i.e. to the computer 110 or to the mobile communication device 120, for example in the form of a Captcha, a push notification, a text message based on SMS (Short Messaging Service), an e-mail, an instant message, or by utilizing any other suitable communication technique. In a preferred embodiment, the text challenge has a limited validity, not lasting longer than a short amount of time, e.g. 60 seconds, before a new challenge has to be generated, invalidating any previous challenge that may have been generated already.

In step 425, the text challenge is presented to the user on the display of computer 110 or on the display of mobile communication device 120 and by reading out aloud the correct text challenge in step 430, the user provides an audio input in the form of a voice input to the computer 110 or to the mobile communication device 120. The computer 110 or the mobile communication device 120 then generates an audio file from the voice input received from the user and transmits the audio file in step 435 as an authentication request to the authentication server 300.

In order to differentiate between different generated text challenges, the text challenge may preferably comprise a challenge identification, or short a challenge ID, which is transmitted to the authentication server 300 as part of the authentication request. In a simple variant, the challenge ID may be a number, which is incremented with each generated text challenge. Preferably, the challenge ID is also read out by the user as part of the voice input, so that the challenge ID is comprised in the audio file, which is transmitted in step 435 as an authentication request to the authentication server 300. Based on the received challenge ID, the authentication server 300 can determine which challenge has been the correct challenge to be read.

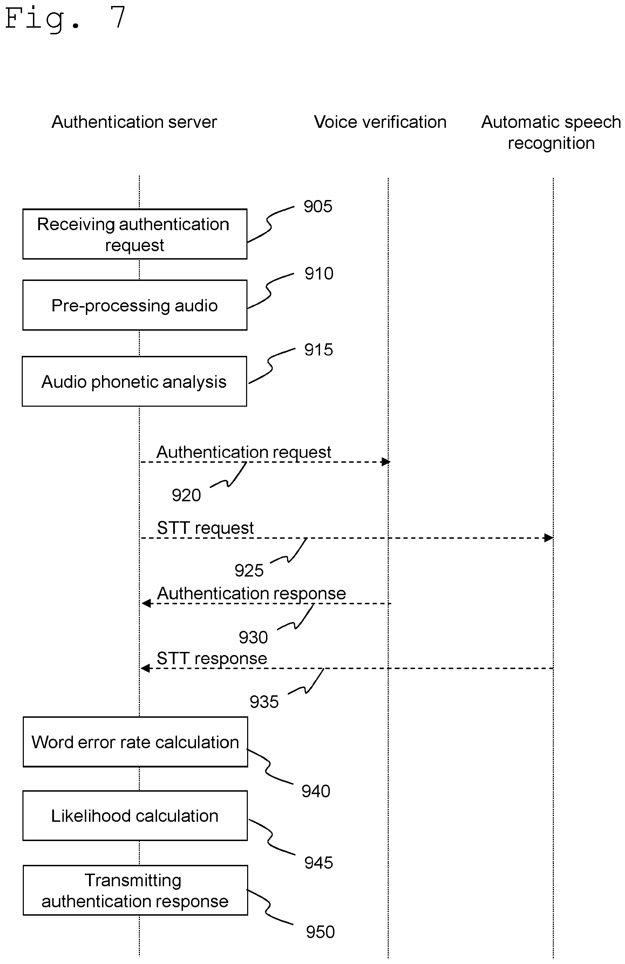

The received authentication request is processed by the authentication server 300 in step 900, resulting in an authentication response, which is transmitted in step 440 to the respective end device, from which the user attempts to login to the online service, i.e. to the computer 110 or to the mobile communication device 120. The authentication processing performed in step 900 is described in more detail below with reference to Fig. 7.

Based on the authentication response a success response is provided to the user in step 445, wherein in case of a successful authentication the response may be that the user is granted access to the online service, and wherein in case of an unsuccessful authentication a message is displayed to the user indicating that the login was unsuccessful due to an unsuccessful authentication and an access to the online service is denied.

The authentication response transmitted in step 440 may comprise the information whether the authentication request is accepted or rejected. Alternatively, the authentication response may comprise a parameter, which indicates a level of confidence that the user's identity is genuine, wherein the parameter may for example be a value between 0 and 1, wherein 1 indicates a confidence level of 100 % and 0 indicates a confidence level of 0 %. In this alternative, the end device decides based on the received confidence level parameter, whether the authentication request is accepted or rejected.

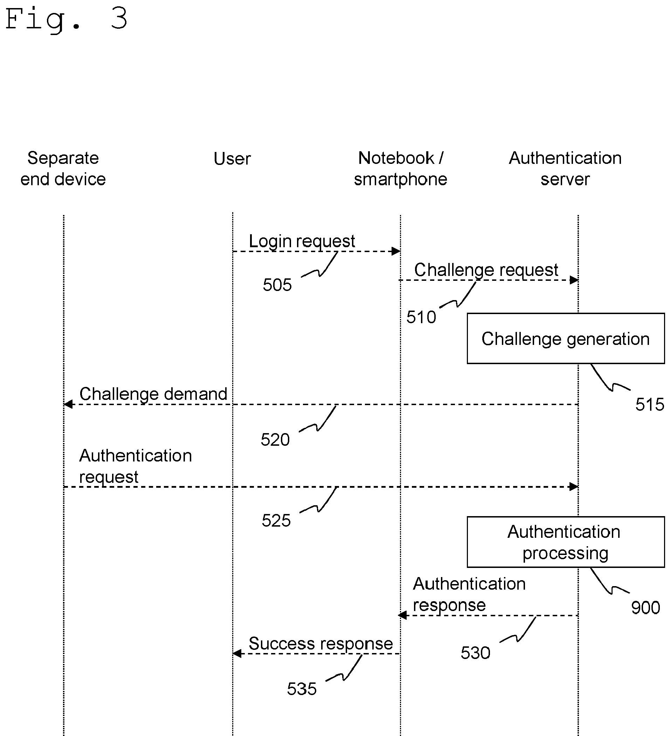

In Fig. 3, a variant of the active voice authentication method described with reference to Fig. 2 is described. The method shown in Fig. 3 differs from that shown in Fig. 2 in that the text challenge is sent to a different end device that the user has pre-registered with the service, wherein contact information is stored in the authentication server 300, so that the authentication server 300 is able to transmit the text challenge to the pre-registered end device. Utilizing a separate end device advantageously results in a two-factor, two-device security.

Similarly to the method shown in Fig. 2, in the method shown in Fig. 3 a user in step 505 makes a login request to log into an online service account with an Internet browser or with a mobile application, providing username and password. The website or the mobile application requires a two-factor authentication from the user or offers a two-factor authentication to the user using the user's voice, resulting in a challenge request for voice verification being transmitted in step 510 from the computer 110 or from the mobile communication device 120 to the authentication server 300. The authentication server 300 in step 515 generates an individual challenge for the user's two-factor authentication attempt.

In the embodiment shown in Fig. 3, in step 520, the text challenge is transmitted from the authentication server 300 not to the end device, from which the user attempts to login to the online service, but to a separate end device. If the user attempts to login to the online service from the computer 110, then the separate end device may be the mobile communication device 120, and vice versa.

In the method shown in Fig. 3, the text challenge may for example also be transmitted in the form of a Captcha, a push notification, a text message based on SMS, an e-mail, an instant message, or by utilizing any other suitable communication technique, wherein the text challenge again preferably has a limited temporal validity, before a new challenge has to be generated.

The pre-registered separate end device, to which the text challenge is transmitted, is adapted to present the text challenge to the user, in particular on a display of the separate end device, to capture a voice input of the user, to generate an audio file from the voice input and to transmit the audio file in step 525 as an authentication request to the authentication server 300, wherein the authentication request comprises a challenge ID.

The further steps of the method shown in Fig. 3 are identical to the method shown in Fig. 2. Accordingly, the received authentication request is processed by the authentication server 300 in step 900, resulting in an authentication response, which is transmitted in step 530 to the end device, from which the user attempts to login to the online service, i.e. to the computer 110 or to the mobile communication device 120.

Based on the authentication response a success response is provided to the user in step 535, indicating whether the authentication was successful and accordingly whether access to the online service is granted or denied.

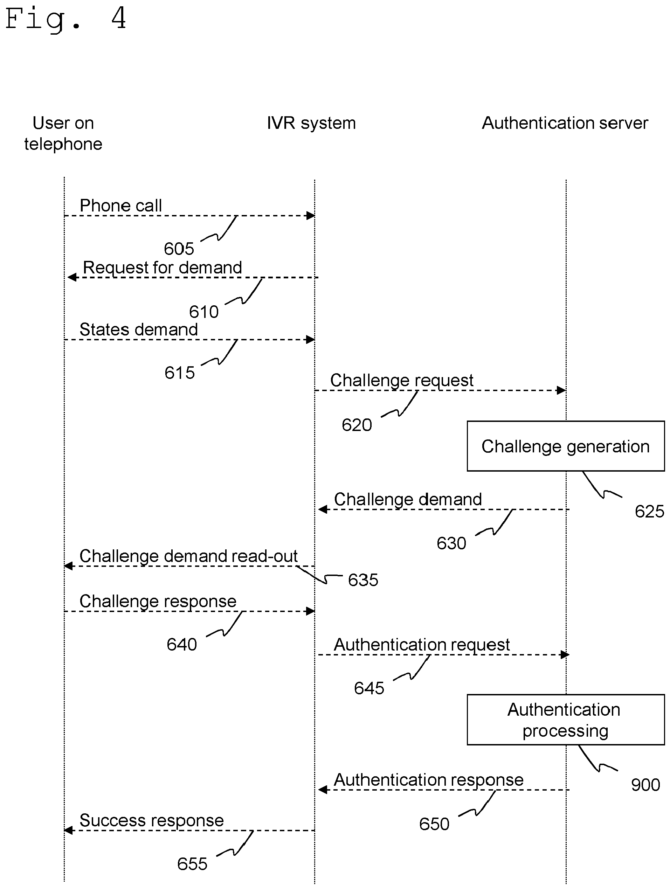

In Figures 4, 5 and 6 variants of the inventive method are shown, in which an IVR (Interactive Voice Response) system is utilized, such as the IVR system 150 show in Fig. 1.

In Fig. 4 an active voice authentication method is described utilizing an IVR system, such as the IVR system 150 shown in Fig. 1, which may be called by a user with a telephone. In the method shown in Fig. 4 the user in step 605 is calling the service telephone hotline of his service of choice, which may for instance be the service of a bank, an insurance company or a retailer. For this purpose, the user calls a predefined telephone number using a landline telephone, for instance the telephone 130 shown in Fig. 1, so that the telephone 130 is connected to the IVR system 150 via the telephone network 230. The user may also call the IVR system 150 of the service telephone hotline using a mobile communication device such as a smartphone.

After having established a communication connection between the telephone 130 and the IVR system 150, the IVR system in step 610 typically provides pre-recorded audio, comprising a greeting, general information, service options that may be requested by the user and/or a request for the user to state a demand, wherein the user in response is stating a demand or service request in step 615, which results in the need to authenticate the user before the service request can be processed accordingly.

Due to the need for user authentication, the IVR system 150 in step 620 transmits a challenge request to the authentication server 300, via Internet 210 or via a different suitable communication path. The challenge request preferably comprises an identification information, which identifies the user, wherein this identification information may for example be the telephone number of the user, which the IVR system 150 has derived using the caller identification, short caller ID, telephone service, which is available in analog and digital telephone systems, including voice over IP (VoIP), and which transmits a caller's telephone number to the called party's telephone equipment when the call is being set up. The identification information may also be provided by the user by providing a voice input or by providing an input using the telephone's keypad.

The authentication server 300 in step 625 generates an individual challenge for the user's two-factor authentication attempt. In the shown embodiment, the authentication server 300 generates a random phrase to be read out aloud by the user, wherein the random pass phrase generated is enriched with the request for some individual information only the actual user can know. An example for a challenge comprising a random pass phrase may be "Please repeat the following sentence, but with the correct name of your cousin: My cousin 'John Doe' is walking on the street". In this example, the correct name of the user's cousin, for instance 'Peter Miller', is stored in a database in such a way that the authentication server 300 has access to the stored information and that the information is associated with the individual user. Thus, the correct pass phrase for the user to speak out aloud would be: "My cousin Peter Miller is walking on the street.". For accessing the individual user information stored in the database, the authentication server 300 may utilize a user identification information in the form of identification data, which is comprised in the received challenge request.

It is, however, also conceivable that the authentication server 300 identifies the user on the basis of a voice input provided by the user, wherein said voice input is comprised in the challenge request, which is received by the authentication server 300. In such a variant of the method, the authentication server 300 performs identification and authentication of the user depending on the received authentication request, wherein in this case the challenge may also comprise a request directed to the user to provide an identification information, for instance by speaking out aloud the user's name and address or some kind of identification number, such as a bank account number.

The individual challenge is transmitted in step 630 to the IVR system 150. The challenge may be transmitted in the form of an audio file, which is then played by the IVR system 150 for the user in step 635. Alternatively, the challenge may be transmitted as a text, which is then read-out to the user in step 635, wherein the text is converted into speech by the IVR system 150 using TTS (Text-to-Speech) technology. In the example given above, the random pass phrase "Please repeat the following sentence, but with the correct name of your cousin: My cousin 'John Doe' is walking on the street" may be read out to the user while he is on the phone.

In step 640 the user provides an audio input in the form of a voice input to the IVR system 150, for instance the above described pass phrase plus the requested personalized information, optionally also comprising an identification information, wherein the user's voice input is recorded by the IVR system 150, thereby generating audio data, in particular an audio file. The generated audio data is then transmitted in step 645 as an authentication request to the authentication server 300.

The further steps of the method shown in Fig. 4 are similar to those of the methods shown in Figures 2 and 3. Accordingly, the received authentication request is processed by the authentication server 300 in step 900, resulting in an authentication response, which is transmitted in step 650 to the IVR system 150, which has an established telephone connection with the user. The authentication processing performed in step 900 is described in more detail below with reference to Fig. 7.

Based on the authentication response a success response is provided to the user by the IVR system 150 in step 655, wherein in case of a successful authentication the response may be that the IVR system 150 provides a pre-recorded audio information informing the user that the authentication was successful, and wherein in case of an unsuccessful authentication a pre-recorded audio information is provided to the user by the IVR system 150 informing the user that the demand or service request, which had been stated by the user in step 615, cannot be processed, because the user was not successfully authenticated. In case of a successful authentication, the demand or service request, which had been stated by the user in step 615, is processed by the IVR system 150, for instance by providing further service options, which are only accessible by authenticated users.

The authentication response transmitted in step 650 may comprise the information whether the authentication request is accepted or rejected. Alternatively, the authentication response may comprise a parameter, which indicates a level of confidence that the user's identity is genuine, wherein the parameter may for example be a value between 0 and 1, wherein 1 indicates a confidence level of 100 % and 0 indicates a confidence level of 0 %. In this alternative, the IVR system 150 decides based on the received confidence level parameter, whether the authentication request is accepted or rejected.

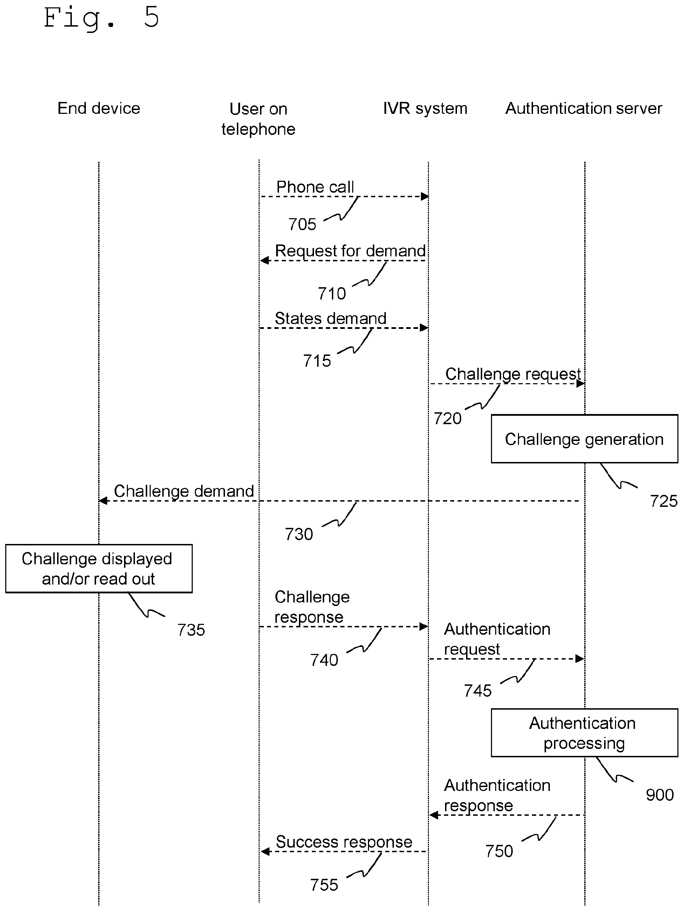

A variant of the active voice authentication method, which has been described with reference to Fig. 4, is described in Fig. 5. The exemplary method shown in Fig. 5 differs from that shown in Fig. 4 in that a challenge generated by the authentication server 300 is transmitted to a separate end device of the user instead of being sent to the IVR system 150. If the user has called the IVR system 150 using for example the telephone 130 shown in Fig. 1, the separate end device of the user may for example be the notebook 110 or the smartphone 120 shown in Fig. 1.

Accordingly, the user in step 705 calls the service telephone hotline of his service of choice by calling a predefined telephone number using a landline telephone, for instance the telephone 130 shown in Fig. 1, so that the telephone 130 is connected to the IVR system 150 via the telephone network 230.

After having established a communication connection between the telephone 130 and the IVR system 150, the IVR system in step 710 typically provides pre-recorded audio, for instance as described above with reference to Fig. 4, and the user in response is stating a demand or service request in step 715. In order to perform user authentication, the IVR system 150 in step 720 transmits a challenge request to the authentication server 300, via Internet 210 or via a different suitable communication path. The authentication server 300 in step 725 generates an individual challenge for the user's two-factor authentication attempt.

In the embodiment shown in Fig. 5, the authentication server 300 may generate a random phrase to be read out aloud by the user, wherein the random pass phrase generated is enriched with the request for some individual information only the actual user can know. Thus, the challenge may exemplary be provided in a form as described above with reference to Fig. 4, i.e. the challenge may be provided as an audio file, which is played to the user in step 735, or as a text, which is read-out to the user in step 735, using for instance TTS technology.

However, the challenge may exemplary also be delivered in a form as described above with reference to Fig. 3. Accordingly, the challenge may be provided as a text challenge, wherein the text challenge is transmitted in the form of a Captcha, a push notification, a text message based on SMS, an e-mail, an instant message, or by utilizing any other suitable communication technique, wherein the text challenge preferably has a limited temporal validity, before a new challenge has to be generated. In this variant, the pre-registered separate end device, to which the text challenge is transmitted, in step 735 presents the text challenge to the user, in particular on a display of the separate end device.

In response to the challenge being presented to the user by the separate end device, either as text or as audio, the user provides voice input to the IVR system 150 using his telephone. The user's voice input is captured by the IVR system 150 and from the user's voice input an audio file is generated by the IVR system 150. In step 745 the generated audio file is transmitted as an authentication request to the authentication server 300. Preferably, the challenge comprises a challenge ID, which is then incorporated into the authentication request sent to the authentication server 300. For instance, the challenge ID is presented to the user by the separate end device, so that the user may incorporate it into the voice input, which the user provides using the telephone.

The further steps of the method shown in Fig. 5 are again similar to those of the methods shown in the previous Figures. Accordingly, the received authentication request is processed by the authentication server 300 in step 900, resulting in an authentication response, which is transmitted in step 750 to the IVR system 150, which has an established telephone connection with the user. The authentication processing performed in step 900 is described in more detail below with reference to Fig. 7.

Based on the authentication response a success response is provided to the user by the IVR system 150 in step 755, wherein in case of a successful authentication the response may be that the IVR system 150 provides a pre-recorded audio information informing the user that the authentication was successful, and wherein in case of an unsuccessful authentication a pre-recorded audio information is provided to the user by the IVR system 150 informing the user that the demand or service request, which had been stated by the user in step 715, cannot be processed, because the user was not successfully authenticated. In case of a successful authentication, the demand or service request, which had been stated by the user in step 715, is processed by the IVR system 150, for instance by providing further service options, which are only accessible by authenticated users.

The authentication response transmitted in step 750 may comprise the information whether the authentication request is accepted or rejected. Alternatively, the authentication response may comprise a parameter, which indicates a level of confidence that the user's identity is genuine, wherein the parameter may for example be a value between 0 and 1, wherein 1 indicates a confidence level of 100 % and 0 indicates a confidence level of 0 %. In this alternative, the IVR system 150 decides based on the received confidence level parameter, whether the authentication request is accepted or rejected.

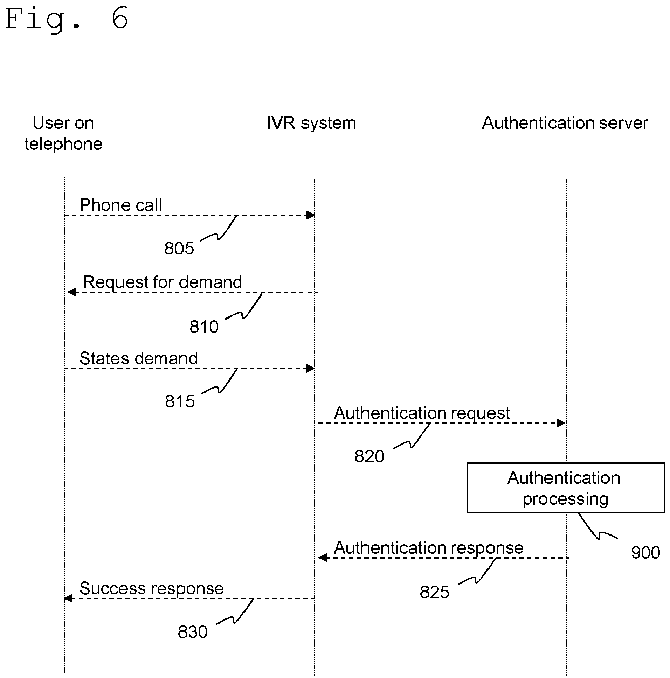

In Fig. 6 a passive voice authentication method is described utilizing an IVR system, such as the IVR system 150 shown in Fig. 1, which may be called by a user with a telephone.

In the methods described with reference to Figures 4 and 5, the IVR system 150 actively requests a challenge from the authentication server 300 in response to receiving a demand from a user. In contrast to that, in the method schematically depicted in Fig. 6, the IVR system 150 is passive, in that no such challenge request is transmitted to the authentication server 300. Instead, when a user connects to the IVR system 150, the user is directly prompted to state details of his request in combination with a random detail only known to the user himself and/or in combination with a random detail, which is suitable to identify the user as a human. In other words, in this variant of the method a challenge is directly provided by the IVR system 150, instead of requesting a challenge from the authentication server 300. Accordingly, the user in step 805 calls the service telephone hotline of his service of choice by calling a predefined telephone number using a landline telephone, for instance the telephone 130 shown in Fig. 1, so that the telephone 130 is connected to the IVR system 150 via the telephone network 230.

After having established a communication connection between the telephone 130 and the IVR system 150, the IVR system in step 810 typically provides pre-recorded audio and the user in response is stating a demand or service request in step 815. Exemplary, the user may be prompted, by the pre-recorded audio, to state details of his request in combination with the date of birth of the user's spouse and/or in combination with the current weekday, wherein by stating the date of birth of the user's spouse the user provides an information only known to the user, and wherein by stating the current weekday the user proves himself to be a human.

In an exemplary embodiment of the method shown in Fig. 6, in the IVR system 150 a number of pre-recorded audio files may be stored, wherein each audio file, when played, comprises the request for the user to state a different detail only known to the user in combination with the details of the user's service request, and wherein, in response to a user connecting to the IVR system 150, one of the number of stored audio files is randomly selected by the IVR system 150 and the content of the selected audio file is provided to the user, i.e. the selected audio file is played. In this exemplary embodiment, the random challenge to provide a certain detail, which is only known to the user, preferably is not a challenge, which is individual for a specific user, but may comprise one of a number of standard challenges, wherein the correct answers to these standard challenges are stored in in a customer database of the service provider, to which the authentication server 300 has access.

In order to perform user authentication, the IVR system 150 captures the user's voice input and generates from the user's voice input an audio file, and in step 820 the IVR system 150 transmits an authentication request to the authentication server 300, said authentication request comprising the generated audio file. Preferably, the authentication request also comprises an information identifying the user, such as for example the user's telephone number, wherein this identification information can be used by the authentication server 300 to retrieve user-specific information from the customer database, such as for example the correct answers to the above-described standard challenges.

The further steps of the method shown in Fig. 6 are again similar to those of the methods shown in the previous Figures. Accordingly, the received authentication request is processed by the authentication server 300 in step 900, resulting in an authentication response, which is transmitted in step 825 to the IVR system 150, which has an established telephone connection with the user. The authentication processing performed in step 900 is described in more detail below with reference to Fig. 7.

Based on the authentication response a success response is provided to the user by the IVR system 150 in step 830, wherein in case of a successful authentication the response may be that the IVR system 150 provides a pre-recorded audio information informing the user that the authentication was successful, and wherein in case of an unsuccessful authentication a pre-recorded audio information is provided to the user by the IVR system 150 informing the user that the demand or service request, which had been stated by the user in step 815, cannot be processed, because the user was not successfully authenticated. In case of a successful authentication, the demand or service request, which had been stated by the user in step 815, is processed by the IVR system 150, for instance by providing further service options, which are only accessible by authenticated users.

The authentication response transmitted in step 825 may comprise the information whether the authentication request is accepted or rejected. Alternatively, the authentication response may comprise a parameter, which indicates a level of confidence that the user's identity is genuine, wherein the parameter may for example be a value between 0 and 1, wherein 1 indicates a confidence level of 100 % and 0 indicates a confidence level of 0 %. In this alternative, the IVR system 150 decides based on the received confidence level parameter, whether the authentication request is accepted or rejected.

With reference to Fig. 7 the authentication processing, which is respectively performed in step 900 of the above-described variants of a voice-based authentication method, is described in more detail. In other words, the step 900 as shown in each of the Figures 2 to 6, respectively comprises the steps 905 to 950 as shown in Fig. 7.

In step 905 the authentication server 300 receives the respective authentication request, either from an end device of the user, such as computer 110 or mobile communication device 120, or from an IVR system 150. The authentication request, which is received in step 905, is transmitted in any one of the steps 435, 525, 645, 745 or 820 of the above-described variants of the method.

In each of the described variants of the method, the received authentication request comprises audio data, wherein said audio data comprises voice input of the user. The authentication request in particular is received via a backbone network, such as network 250 shown in Fig. 1, and via the Internet or via a cellular network, respectively depicted in Fig. 1 as exemplary networks 210 and 220. Furthermore, the authentication request preferably is transmitted using any kind of communication protocol suitable for communication via said networks. In particular, the authentication request comprises the audio data in the form of a digital audio sequence or digital audio file, wherein the authentication request may comprise further data in addition to said audio data. Said further data may for example comprise information for identifying the user, information for identifying a user request, or information for identifying a challenge.

In step 910 the authentication server 300 is pre-processing the audio data to prepare a voice verification process and to calculate additional security parameters of the user's voice. The pre-processing performed in step 910 preferably comprises at least one of sampling, noise cancellation, dynamic range compression, band-pass filtering, and silence trimming.

Since the audio data typically already is transmitted in digital from, the sampling may advantageously comprise a re-sampling of the audio data or a conversion of the sample rate of the audio data, in order to prepare further processing of the audio data. Noise cancellation in particular comprises a process of removing noise in the audio data, wherein the term noise cancellation shall also encompass an incomplete noise cancellation, i.e. a noise reduction. For noise cancellation or noise reduction any known techniques or signal processing algorithms, such as for example time-frequency filters, may be employed. Dynamic range compression (DRC) is an audio signal processing operation that reduces the volume of loud sounds or amplifies quiet sounds, thereby reducing or compressing the dynamic range of an audio signal. Band-pass filtering has the purpose of attenuating frequencies in an audio signal that lie outside of a pre-defined frequency range. Silence trimming has the purpose of deleting silent parts of an audio signal, in particular at the start and at the end of the audio signal.

As a further processing, in step 915 an audio phonetic analysis is performed on the pre-processed audio data. The audio phonetic analysis may exemplary comprise an analysis based on mel-frequency cepstral coefficients (MFCCs), which are derived from the pre-processed audio data. MFCCs are features derivable from an audio signal, which are commonly utilized in speech recognition. Typically, for deriving MFCCs of audio data, the audio data is converted into frames, the Fourier transform is taken of each frame, the powers of the obtained spectrum are mapped onto the mel scale, the logarithms of the powers at each of the mel frequencies are taken, and the discrete cosine transform is taken of the list of mel log powers, wherein the amplitudes of the resulting spectrum are the MFCCs. The audio phonetic analysis may also comprise, alternatively or additionally, a spectrogram analysis, wherein a spectrogram of the audio data is generated. In particular, the phonetic analysis performed on the received audio data has the purpose to verify the actual validity and authenticity of an actual voice file, and to identify and classify synthesized, artificial and pre-recorded audio.

In the embodiment shown in Fig. 7, the voice verification is performed in a voice verification server, which is separate from the authentication server 300. For this purpose, in step 920 an authentication request is transmitted from the authentication server 300 to the voice verification server and the results of the voice verification are transmitted back to the authentication server 300 in step 930.

For verifying the user's voice, the MFCCs of the pre-processed audio data are compared with MFCCs of a stored voiceprint of the user, wherein the voiceprint of the user is retrieved from a database, to which the voice verification server has access, and in which user-specific information is stored for a plurality of users, wherein said user-specific information at least comprises identification information and a voiceprint of the respective user. Alternatively or additionally a spectrogram of the audio data may be compared to the stored voiceprint of the user.

Furthermore, an automatic speech recognition is performed on the audio data, which in the shown embodiment is performed in a speech recognition server, which is separate from the authentication server 300. For this purpose, in step 925 a speech-to-text (STT) request is transmitted from the authentication server 300 to the speech recognition server and the results of the speech recognition are transmitted back to the authentication server 300 in step 935. By the automatic speech recognition the received audio data with the user's voice input is converted into text. Therefore, typically an audio file is transmitted to the speech recognition server and a text file is transmitted back to the authentication server 300.

In step 940, the text provided by the speech recognition server, which represents the user's voice input, is compared to the text, which should have been provided by the user, and which depends on which of the above-described variants of the method is employed, and in particular on the challenge that was provided to the user. The comparison preferably comprises a word error rate calculation, which yields a measure for the similarity between the spoken text and the text, which should have been spoken, wherein the text that should have been spoken in particular has before been generated by the authentication server 300 as a challenge provided to the user. The word error rate calculation is responsible to verify if the correct text that has been generated for the text challenge has been read by the customer. For this purpose the audio of the customers voice is being transcribed into text (Speech to Text, STT) and then various methods to determine correct wording and grammar are applied to ensure the text is correct. For this purpose, the comparison may further comprise a phonetic comparison to distinguish between different spellings.

It is to be noted that the functionality of each of the speech recognition server and the voice verification server may also be integrated in the authentication server 3300, for example as dedicated software modules.

Based on the results of the analysis performed in steps 910 to 940 a likelihood calculation is performed in step 945. In particular, the calculated word error rate, the result of the phonetic analysis, the result of the voice verification, for instance as a calculated voice verification confidence value, and also audio frame rate and sample width attributes may be taken into account as parameters for calculating a likelihood value, wherein said likelihood value is a measure, how likely it is that the analyzed audio data is an authentic voice input of the user. The likelihood value, which preferably may range between 0 and 1, thus provides a confidence level of user identity between 0 % and 100 %. The parameters used for calculating the likelihood value may with advantage be individually weighed and/or personalized depending on the respective user to be authenticated and/or depending on the respective use case.

In step 950 the authentication server 300 is transmitting an authentication response. This step corresponds to any one of the steps 440, 530, 650, 750 or 825 of the above-described variants of the method.

The authentication response transmitted in step 950 may comprise the above-mentioned likelihood value, i.e. a parameter, which indicates a level of confidence that the user's identity is genuine, wherein the parameter may for example be a value between 0 and 1, wherein 1 indicates a confidence level of 100 % and 0 indicates a confidence level of 0 %. Alternatively, the authentication response transmitted in step 950 may comprise the information whether the authentication request is accepted or rejected, wherein this decision is made by the authentication server 300, based on the calculated likelihood value, since the calculated likelihood value allows to finally determine a user's authenticity and if his authentication request can safely be accepted or rejected.

Any aspects or features of the method, which have been described above in the context of different variants of the method may also be combined in any sensible way.

At least some of the preferred aspects are again summarized below.

According to one aspect, a method for multi-factor authentication is provided, said multi-factor authentication comprising a voice based authentication, the method comprising the steps of
a) capturing a voice input provided by a user,
b) transmitting an authentication request, for instance in step 435 of the method variant described with reference to Fig. 2, in step 525 of the method variant described with reference to Fig. 3, in step 645 of the method variant described with reference to Fig. 4, in step 745 of the method variant described with reference to Fig. 5, or in step 820 of the method variant described with reference to Fig. 6, from an authentication requesting device, for instance a respective one of the devices 110, 120 or 150, to an authentication server 300, wherein said authentication request comprises the captured voice input,
c) verifying the user's identity by the authentication server 300 based on the received voice input and generating an authentication response by the authentication server 300 depending on the result of the verification,
d) transmitting the authentication response, for instance in step 440 of the method variant described with reference to Fig. 2, in step 530 of the method variant described with reference to Fig. 3, in step 650 of the method variant described with reference to Fig. 4, in step 750 of the method variant described with reference to Fig. 5, or in step 825 of the method variant described with reference to Fig. 6, from the authentication server 300 to a pre-defined response receiving device, for instance a respective one of the devices 110, 120 or 150, wherein the pre-defined response receiving device in particular is the authentication requesting device. However, as described above, in certain preferred embodiments of the method the authentication requesting device and the pre-defined response receiving device may also be different devices.

The method with advantage, comprises, prior to step a), the steps of
- transmitting a challenge request, for instance in step 410 of the method variant described with reference to Fig. 2, in step 510 of the method variant described with reference to Fig. 3, in step 620 of the method variant described with reference to Fig. 4, or in step 720 of the method variant described with reference to Fig. 5, from a challenge requesting device to the authentication server 300,
- generating a challenge by the authentication server 300 and transmitting the challenge from the authentication server 300 to a pre-defined challenge receiving device,
   and
- presenting the challenge to the user,
   wherein the user provides the voice input which is captured in step a) in response to the challenge being presented.

The challenge requesting device and the challenge receiving device may for instance be respective ones of the devices 110, 120 or 150 shown in Fig. 1, wherein the pre-defined challenge receiving device in particular is the challenge requesting device or the authentication requesting device. However, as described above, in certain preferred embodiments of the method the pre-defined challenge receiving device may be a device different from the challenge requesting device and/or the authentication requesting device

Typically, the challenge is presented to the user by the challenge receiving device, either visually or via audio output. Preferably, the challenge is presented to the user in the form of an audio sequence, a text and/or a Captcha.

With advantage, the challenge comprises information, which is randomly generated by the authentication server 300 and/or user-specific information, which is known only to the user.

In a preferred embodiment of the method, the challenge has a pre-defined validity period, which starts, when the challenge is generated by the authentication server 300 and ends after a pre-defined time duration, wherein after the pre-defined validity period has ended a successful authentication on the basis of the respective challenge is no longer possible.

As described above, in step c) the user's identity is verified by the authentication server 300 based on the received voice input and an authentication response is generated by the authentication server 300 depending on the result of the verification.

This step preferably comprises several diverse processing steps, as for instance a pre-processing of the received voice input, for instance performed in step 910, wherein said pre-processing comprises at least one of sampling, noise cancellation, dynamic range compression, band-pass filtering, and silence trimming.

The pre-processing in particular has the purpose to prepare the following processing steps, which preferably comprise verifying the user's voice by performing a phonetic analysis of the pre-processed voice input, for instance in step 915, and comparing the result of the phonetic analysis with a stored voiceprint of the user, wherein the phonetic analysis comprises at least one of a mel-frequency cepstral coefficient analysis, and a spectrogram analysis.

As an alternative or additional processing step the pre-processed voice input advantageously is converted into text using an automatic speech recognition algorithm and the converted text is compared with a target text, wherein in particular a word error rate is calculated, for instance in step 940.

In order to perform the above-described comparisons, the authentication server 300 with advantage has access to a database, in which user-specific information is stored for a plurality of users, said user-specific information at least comprising identification information of the respective user, and a voiceprint of the respective user.

In a preferred embodiment, the method is performed during a registration process, wherein the registration process requires a user identification and a verification of the user's identity, and wherein the authentication server confirms the identity of the user.

According to another aspect an authentication server 300 for multi-factor authentication is provided, said multi-factor authentication comprising a voice based authentication, wherein the authentication server 300 is adapted to
- receive an authentication request, for instance in one of steps 435, 525, 645, 745 or 820, from an authentication requesting device, such as one of the devices 110, 120 or 150, wherein said authentication request comprises a captured voice input,
- verify a user's identity based on the received voice input,
- generate an authentication response depending on the result of the verification, and
- transmit the authentication response, for instance on one of steps 440, 530, 650, 750 or 825, to a pre-defined response receiving device, such as one of the devices 110, 120 or 150, wherein the pre-defined response receiving device in particular is the authentication requesting device.

In a further aspect an authentication system is provided, which comprises a database of a telecommunication provider, wherein in the database user-specific information is stored for a plurality of users, said user-specific information at least comprising identification information of the respective user, and a voiceprint of the respective user, and an authentication server 300, as it is described above, which is arranged in a backbone network 250 of the telecommunication provider.

## Claims

1. A method for multi-factor authentication, said multi-factor authentication comprising a voice based authentication, the method comprising the steps of
a) capturing a voice input provided by a user,
b) transmitting an authentication request (435, 525, 645, 745, 820) from an authentication requesting device (110, 120, 150) to an authentication server (300), wherein said authentication request comprises the captured voice input,
c) verifying the user's identity by the authentication server (300) based on the received voice input and generating an authentication response by the authentication server (300) depending on the result of the verification, and
d) transmitting the authentication response (440, 530, 650, 750, 825) from the authentication server (300) to a pre-defined response receiving device (110, 120, 150), wherein the predefined response receiving device in particular is the authentication requesting device.

2. The method of claim 1, comprising, prior to step a), the steps of
- transmitting a challenge request (410, 510, 620, 720) from a challenge requesting device (110, 120, 150) to the authentication server (300),
- generating a challenge by the authentication server (300) and transmitting the challenge from the authentication server to a pre-defined challenge receiving device (110, 120, 150), wherein the pre-defined challenge receiving device in particular is the challenge requesting device or the authentication requesting device, and
- presenting the challenge to the user,
wherein the user provides the voice input which is captured in step a) in response to the challenge being presented.

3. The method of claim 2, wherein the challenge is presented to the user in the form of an audio sequence, a text and/or a Captcha.

4. The method of any one of claims 2 or 3, wherein the challenge comprises information, which is randomly generated by the authentication server (300) and/or
user-specific information, which is known only to the user.

5. The method of any one of claims 2 to 4, wherein the challenge has a pre-defined validity period, which starts, when the challenge is generated by the authentication server (300) and ends after a pre-defined time duration, wherein after the pre-defined validity period has ended a successful authentication on the basis of the respective challenge is no longer possible.

6. The method of any one of the preceding claims, wherein step c) comprises a pre-processing (910) of the received voice input, wherein said pre-processing comprises at least one of
- sampling,
- noise cancellation,
- dynamic range compression,
- band-pass filtering, and
- silence trimming.

7. The method of claim 6, wherein step c) comprises
- verifying the user's voice by performing a phonetic analysis (915) of the pre-processed voice input and comparing the result of the phonetic analysis with a stored voiceprint of the user, wherein the phonetic analysis comprises at least one of
- a mel-frequency cepstral coefficient analysis, and
- a spectrogram analysis,
and/or
- converting the pre-processed voice input into text using an automatic speech recognition algorithm and comparing the converted text with a target text, wherein in particular a word error rate is calculated (940).

8. The method of any one of the preceding claims, wherein the authentication server (300) has access to a database, in which user-specific information is stored for a plurality of users, said user-specific information at least comprising
- identification information of the respective user, and
- a voiceprint of the respective user.

9. The method of any one of the preceding claims, wherein the method is performed during a registration process, wherein the registration process requires a user identification and a verification of the user's identity, and wherein the authentication server confirms the identity of the user.

10. An authentication server (300) for multi-factor authentication, said multi-factor authentication comprising a voice based authentication, wherein the authentication server (300) is adapted to
- receive an authentication request (435, 525, 645, 745, 820) from an authentication requesting device (110, 120, 150), wherein said authentication request comprises a captured voice input,
- verify a user's identity based on the received voice input,
- generate an authentication response (440, 530, 650, 750, 825) depending on the result of the verification, and
- transmit the authentication response (440, 530, 650, 750, 825) to a pre-defined response receiving device (110, 120, 150), wherein the pre-defined response receiving device in particular is the authentication requesting device.

11. An authentication system, comprising
- a database of a telecommunication provider, wherein in the database user-specific information is stored for a plurality of users, said user-specific information at least comprising
- identification information of the respective user, and
- a voiceprint of the respective user, and
- an authentication server (300) according to claim 10, which is arranged in a backbone network (250) of the telecommunication provider.
